(19) Europäisches Patentamt
European Patent Office
Office européen des brevets

(11) Publication number : 0 463 736 A2

(12) # EUROPEAN PATENT APPLICATION

(21) Application number : 91304825.2

(22) Date of filing : 29.05.91

(51) Int. Cl.[5] : C08J 9/12, C08J 9/14, // C08L25:04

(30) Priority : 30.05.90 US 530637

(43) Date of publication of application : 02.01.92 Bulletin 92/01

(84) Designated Contracting States : DE ES FR GB IT NL

(71) Applicant : AMOCO CORPORATION
200 East Randolph Drive
Chicago Illinois 60601 (US)

(72) Inventor : Harfmann, Walter Rudolph
1360 Acworth Due West Road
Kennesaw, Georgia 30144 (US)

(74) Representative : Ritter, Stephen David et al
Mathys & Squire 10 Fleet Street
London EC4Y 1AY (GB)

(54) **Method for production of styrenic foam using an alcohol-alkane blowing agent composition.**

(57) The invention comprises a method to produce thin styrenic foam sheets using a blowing agent composition comprising at least one $C_1$ to $C_3$ alcohol and at least one $C_2$ to $C_5$ alkane. Use of the method results in significantly lowered volatile organic compounds (VOC) emissions from styrenic foam manufacturing.

EP 0 463 736 A2

## FIELD OF THE INVENTION

This invention relates to a method for the production of a styrenic foam using a blowing agent composition which comprises forming a mixture of a molten styrenic resin, at least one $C_1$ to $C_3$ alcohol and at least one $C_2$ to $C_5$ alkane.

## BACKGROUND OF THE INVENTION

Thermoplastic foams made from styrenic polymers, such as polystyrene, have found extensive use in food service applications, particularly in the form of articles, such as plates or cups, formed from thin foam sheets having thicknesses generally less one-quarter inch. Such thin styrenic foam sheets typically are made by mixing a volatile blowing agent with the styrenic resin under a controlled temperature and pressure sufficient to liquefy and plasticize the resin and to maintain the resin in an unfoamed state, and then extruding the resin-blowing agent mixture through an annular die into a zone of lower temperature and pressure which results in the formation of a styrenic foam pipe, which is then slit and flattened to produce the foam sheet. The foam sheets are then thermoformed into various shaped articles.

Blowing agent compositions for styrenic foam production generally are required first to have a system vapor pressure at the melt temperature of the styrenic resin used sufficient to produce acceptable foam, and second to provide sufficient plasticization to the styrenic resin to permit extrusion at commercial production rates. The blowing agent should also not have too high a permeation rate through the styrenic resin, to provide good post-expansion during thermoforming.

Most styrenic foam sheets have been commercially produced using either $C_3$-$C_6$ alkanes or chlorofluorocarbons, such as dichlorodifluoromethane or mixtures of such alkanes with chlorofluorocarbons. However, these chlorofluorocarbons are suspected of reacting with ozone after their release into the earth's atmosphere. In addition, it is desirable to use a blowing agent which does not release significant amounts of volatile organic compounds ("VOC") to comply with more stringent governmental regulation of VOC emissions.

Various blowing agents for styrenic foams have previously been disclosed. Suh, et al., U.S. Patent 4,421,866, issued December 20, 1983, discloses styrenic foam production using a blowing agent selected from the group consisting of (1) a blowing agent mixture of from about 5 to 20 weight percent isopropyl alcohol, from about 5 to 50 percent chlorodifluoromethane, and from about 30 to 70 percent dichlorodifluoromethane; (2) a mixture of from about 5 to 50 percent of ethanol, methanol or mixtures thereof, from about 5 to 50 percent of chlorodifluoromethane, and about 30 to 70 percent dichlorofluoromethane, and mixtures thereof. The foams produced by Suh have a minimum thickness of 0.25 inch and minimum cross sectional area of 8 square inches. Suh, et al., U.S. 4,438,224, issued March 20, 1984, is a divisional of U.S. 4,421,866, and claims foams produced with the blowing agent of U.S. 4,421,866, having a thickness greater than 0.25 inch and minimum cross sectional area of 8 square inches.

Shelby, U.S. Patent 3,300,552, issued January 24, 1967, is directed to a method to foam selectively portions of a plastic or partially plastic article by first exposing part or all of the plastic surface of said article to a primary liquid substance and then selectively steeping portions of the previously exposed plastic surface with a secondary liquid substance to form a mixture having a boiling point temperature below the boiling point temperature of the primary liquid substance which can be substantially diffused to prevent foaming at the steeped areas during the subsequent heating operation. The primary liquid substance and the secondary liquid substance must form a constant boiling mixture having a boiling point temperature below the boiling point temperature of the primary liquid substance. Shelby discloses ethyl alcohol:benzene, ethyl alcohol:cyclohexane, ethyl alcohol:hexane, acetone:methyl acetate, acetone:diethylamine, allyl alcohol:hexane, propyl alcohol:toluene, methanol:trichloroethylene, methanol:ethyl bromide, and methanol:pentane as useful in his invention. Shelby does not disclose use of mixtures of a monohydric $C_1$ to $C_3$ alcohol with a $C_2$ to $C_5$ alkane as a blowing agent in a foam extrusion method.

U.S. Patent 3,451,103, Aykanian, and its divisional, U.S. Patent 3,658,973, disclose a styrenic foam production method and apparatus, including use of a blowing agent comprising mixtures of aliphatic alkanes with carbon dioxide.

U.S. Patent 4,344,170, Johnson, discloses a foam production system involving a fluid handling system for storing and preparing a blowing agent consisting of carbon dioxide and an alkane. U.S. Patent 4,424,287, Johnson, is a continuation-in-part of U.S. 4,344,170 and discloses a foam production method using a blowing agent comprising an atmospheric gas, such as $CO_2$, and a volatile organic, such as an aliphatic alkane.

Nakamura, U.S. Patent 3,960,792 discloses a method for producing a styrenic foam using a blowing agent mixture having a specific diffusion rate through the styrenic resin. Nakamura also discloses that aliphatic hydrocarbons, including propane, can be used in his method.

Suh, U.S. Patent 4,636,527 discloses a process for the preparation of an alkenyl aromatic foam, such as a polystyrene foam, using a blowing agent mixture comprising about 3 to 45 wt.% carbon dioxide, about 5 to 97 wt.% ethylchloride and from about 0 to 90 wt.% of a fluorocarbon member which is dichlorodifluoromethane, 1-chloro-1,1-difluoroethane or a mixture of the two chlorofluorocarbons.

None of the prior art styrenic foam extrusion processes have disclosed a blowing agent system of at least one of methanol or ethanol with at least one $C_2$ to $C_5$ alkane. It is a general object of the invention to provide a styrenic foam extrusion method having reduced VOC emissions. It is also a general object to provide an improved styrenic foam sheet extrusion process. It is a specific object to produce thin styrenic foam sheets having thicknesses less than about 0.25 inch using such a blowing agent system. Other objects will be apparent from the specification.

I have found that the objects of the invention can be attained by the use of a method which comprises: forming a mixture comprising at least one molten, styrenic resin, at least one $C_1$ to $C_3$ alcohol and at least one $C_2$ to $C_5$ alkane. The blowing agent mixture of alcohol/alkane provides sufficient plasticization of the resin and has sufficient vapor pressure and permeation rate to produce acceptable foams for food service applications from polystyrene at commercial production rates with reduced VOC emissions. Other benefits of the invention will be addressed below.

## SUMMARY OF THE INVENTION

Briefly, the invention provides a blowing agent useful for the production of styrenic foams which comprises two primary components: at least one $C_1$-$C_3$ alcohol, and at least one $C_2$-$C_5$ alkane. The blowing agent is used in a method which comprises forming a mixture of at least one molten, styrenic resin with the blowing agent. Preferably, the amount of the alcohol in the mixture is about 0.5 part to about 3.0 parts by weight and the amount of alkane in the mixture is about 0.5 part to about 4.0 parts by weight per 100 parts styrenic resin. Optionally, an atmospheric gas, such as nitrogen or $CO_2$, can be added to the mixture to reduce VOC emissions from styrenic foam production even further. The blowing agent composition and the method employing such a composition are particularly useful in the production of polystyrene foams for packaging applications.

The invention thus comprises a method for use of the blowing agent composition which comprises foaming a mixture of a molten styrenic resin and a blowing agent composition comprising at least one $C_1$-$C_3$ alcohol and at least one $C_2$-$C_5$ alkane, to produce a styrenic foam. In a preferred embodiment of the method of the invention, the method comprises producing a styrenic foam by heating a styrenic resin in an extruder to produce a molten resin; introducing into the molten resin a blowing agent comprising at least one $C_1$-$C_3$ alcohol and at least one $C_2$-$C_5$ alkane to produce a plasticized extrusion mass comprising the resin, the alkane and the alcohol mixture under a pressure sufficient to prevent foaming of the extrusion mass; and extruding the extrusion mass through a die into a zone having a temperature and pressure sufficient to permit foaming of the extrusion mass to produce the styrenic foam.

Applicant unexpectedly discovered the alcohol/alkane blowing agent when testing alternative blowing agents to commercial butane blowing agent. Testing of ethanol by itself produced foam of poor quality, but in preparation for the control tests of butane, performed immediately after testing of ethanol, Applicant began purging the test extrusion apparatus with butane. Before the purging was complete, i.e., when a mixture of butane and ethanol was being introduced into the resin, Applicant noticed acceptable foam quality was achieved.

## DESCRIPTION OF THE PREFERRED EMBODIMENTS

The blowing agent composition of the invention comprises two primary components: a monohydric $C_1$-$C_3$ alcohol, including methanol, ethanol, n-propanol, isopropanol or mixtures thereof, and an alkane, which is a $C_2$-$C_5$ alkane or mixtures thereof. Preferably the blowing agent composition has a weight ratio of alcohol to alkane of less than or equal to about 1:1. At alcohol ratios greater than about 1:1, the foam produced may be insufficiently rigid for use. More preferably the weight ratio is less than or equal to 1:2 alcohol to alkane for preferred ethanol-propane system. On a styrenic resin basis the blowing agent composition thus preferably comprises about 0.5 to about 3.0 parts by weight alcohol for 100 parts by weight resin and about 1.0 to about 4.0 parts alkane per 100 parts by weight resin. Applicant prefers to use less than about 7.0 parts by weight total blowing agent per 100 parts resin, since use of amounts greater than 7.0 parts can result in unstable foam.

The preferred minimum of 1.0 part alkane is because lesser amounts may provide too low vapor pressure to produce acceptable low foam density. The preferred maximum amount of 4.0 parts alkane is set because greater amounts can produce unstable foam and can result in higher VOC.

The preferred minimum alcohol amount of 0.5 is for use of methanol since lesser amounts may provide insufficient plasticization. The preferred minimum amount for use of ethanol is 0.75 part per 100 parts resin

and for use of n-propanol or iso-propanol is 1.0 part per 100 parts resin. Use of less than 3.0 parts of any $C_1$-$C_3$ alcohol is preferred because in greater amounts the blowing agent does not produce acceptable foam quality due to lowered system vapor pressure and a high degree of plasticization.

The blowing agent composition of the invention uses the alcohol component to lower permeability of the blowing agent to a desirable level for good post-expansion in subsequent thermoforming. The alcohol is any $C_1$ to $C_3$ monohydric alcohol, including methanol, ethanol, n-propanol, isopropanol and mixtures thereof. The choice of a particular $C_1$ to $C_3$ alcohol is made to vary or control system permeability and vapor pressure as desired. It is preferred to use ethanol in the invention because it has lower toxicity. Denatured ethanol which contains small amounts, for example, 5% by volume, of n-propanol may be used.

At least one aliphatic $C_2$-$C_5$ alkane is used in the blowing agent composition primarily to provide sufficient vapor pressure for production of acceptable thin foams. Any suitable $C_2$-$C_5$ alkane can be used including ethane, propane, n-butane, n-pentane, isobutane, isopentane, neopentane or mixtures thereof. Alkanes of carbon number higher than $C_5$ are not useable in the invention; $C_6$ and up alkanes have higher molecular weight and have insufficient vapor pressure to produce low foam density. Preferably, the alkane is propane because of the excellent VOC reduction achieved from use of propane with ethanol. It is preferred to maintain the alkane amount in the blowing agent composition in the range of about 1.0 part to about 4.0 parts by weight per 100 parts by weight styrenic resin because with lower amounts, acceptable foam is not produced, and with higher amounts, VOC emissions increase.

The blowing agent composition of the invention can also incorporate an atmospheric gas such as nitrogen or $CO_2$ in amounts up to 30 weight percent of the blowing agent composition to reduce VOC emissions. $CO_2$ is preferred as the added atmospheric gas because its lower vapor pressure allows easier processing than other atmospheric gases. In amounts greater than 30 weight percent, the atmospheric gas can result in lowered foam quality.

In the preparation of foams in accordance with the method of the invention, it is often desirable to add a nucleating agent to the styrenic resin. These nucleating agents serve primarily to increase cell count and reduce the cell size in the foam and are used in an amount of about 0.2 part by weight to about four parts by weight per one hundred parts resin. For example, talc, sodium bicarbonate, citric acid, calcium silicate and the like are suitable nucleating agents for reducing cell size. Talc is a preferred nucleating agent component in the practice of the method of the invention. Various other additives, for example plasticizers and colorants, may also be used depending on the end use of the foam sheet.

The invention also comprises a method for producing a thin styrenic foam sheet preferably having a thickness less than about one-quarter inch using the blowing agent composition of the invention. In the method of the invention, a styrenic foam sheet is produced from a "styrenic resin," which herein means a solid polymer of one or more polymerizable alkenyl aromatic compounds or a mixture of such polymers. Such an alkenyl aromatic compound has the general formula:

$$R_1 - \overset{\displaystyle R_2}{\overset{|}{C}} = CH_2$$

wherein $R_1$ represents an aromatic hydrocarbon radical, or an aromatic halohydrocarbon radical of the benzene or substituted benzene series, and $R_2$ is either hydrogen or the methyl radical. Examples of such alkenyl aromatic compounds are the solid homopolymer styrene, homopolymers of alpha-methyl styrene, ortho-methyl styrene, meta-methyl styrene and para-methyl styrene, the copolymers of any of the above, the solid copolymers of one or more of such alkenyl aromatic compounds with amounts of other polymerizable compounds such as methylmethacrylate, acrylonitrile, maleic anhydride, acrylic acid and the like. Impact polystyrene, which is polystyrene mixed with an elastomer such as styrene-butadiene rubber or a polymer comprising copolymerized styrene and butadiene, can also be used. A preferred styrenic resin is polystyrene or impact polystyrene which are readily available from various sources.

In the method of the invention, the styrenic resin is mixed with the blowing agent composition, such as ethanol and propane, to form the mixture of the resin and blowing agent which is then foamed. Preferably the mixing and foaming is carried out with a conventional extruder, wherein the styrenic polymer is heated to above its glass transition temperature (Tg) to produce a molten polymer and the blowing agent is then introduced into the extruder where it is mixed with the molten polymer under pressures such that the resulting plasticized extrusion mass does not foam. The extrusion mass is then extruded through a suitable die, such as a preferred annular die of any desirable circumference, into a zone of lower temperature and pressure which permits the

extrusion mass to foam to produce the styrenic foam. Upon exiting the die, the extrudate is drawn over any desired cooling means and stretched if desired over a sizing means or sizing block. The finished sheet thickness is a function of the take-off rate, the die configuration, the characteristics of the particular extrusion mass, and any cooling means located before the sizing block and is about 0.025 to about 0.25 inches. The resulting foam is then further cooled in any suitable manner to produce any desired surface effect on the foam. The foam produced with an annular die is slit and unfolded to produce the foam sheet.

The temperature and pressure conditions under which the styrenic resin and blowing agent composition mixture will not foam will depend upon the exact styrenic resin used and generally will be the conditions between about 240°F at a pressure above about 1200 psi to a temperature about 440°F at a pressure above about 1800 psi. The conditions of temperature and pressure under which the extrusion mass will foam, again will depend upon the precise styrenic resin used and generally will be any temperature and pressure combination outside the conditions in the previous sentence. However, the more precise the temperature is controlled throughout the extrusion process, the more uniform the resulting foam. The melt plasticization is controlled by the choice of the blowing agent components, the amount of and type of nucleating or other additives present, the particular styrenic resin or mixture being used and its Tg or Tg's and the temperature, pressure and extrusion rate.

In the practice of the method of the invention, the blowing agent may be added to the styrenic resin in any suitable manner, such as by injection of separate streams of alkane and alcohol, and preferably by injection of a stream comprising the two primary components of the blowing agent composition in the desired ratio and at room temperature directly into the molten styrenic resin in the extruder. When using the preferred tandem extruder discussed below, the blowing agent is injected into the resin at the end of the primary extruder section. The blowing agent should be mixed thoroughly with the styrenic resin before the blowing agent and styrenic resin extrusion mass is extruded through the die. This is necessary to produce a foam having uniform cross section.

The extrusion mass comprising the molten resin and the blowing agent composition is extruded into a foaming or expansion zone within which foam formation and expansion takes place. With appropriate extruder dies and sizing blocks, any suitable extrusion equipment capable of processing polystyrenic compositions can be used for the extrusion. Single or multiple-screw extruders can be used, with a tandem extruder being preferred to maximize throughput. Softening of the polymer and mixing with the blowing agent take place during working of the polymer between flights of the screw or screws which also serve to convey the extrusion mass to the extruder die. Screw speed and extruder barrel temperature should be such as to achieve adequate mixing and softening but not so high as to degrade the composition being processed.

In a preferred tandem extruder, the primary/melting extruder screw speeds range from about 80 rpm to about 120 rpm. At such screw speeds, barrel temperatures of about 100 to about 220°F above Tg of the styrenic polymer generally are employed to heat the foamable composition to about 120 to about 200°F above Tg. In the case of extrusion masses in which the polymer consists solely of polystyrene or impact polystyrene preferred for use according to this invention, the preferred barrel temperatures are about 325°F to about 420°F. When the extrusion mass has multiple Tgs, as when a blend of polymers comprising a styrenic resin is used, heating is above the highest Tg of the composition.

In the preferred tandem extruder, the secondary/cooling extruder has a screw speed of about 8 to about 12 rpm and a barrel temperature in the range of about 100°F near the secondary extruder inlet to about 220°F near the extrusion die.

The plasticized, foamable extrusion mass is extruded into the foaming zone or stage in which foaming, expansion and cooling of the extrusion mass occurs. Preferably, immediately after exiting the die, the foaming extrudate passes through a conventional cooling air ring which cools one surface of the extrudate to provide an aesthetic surface finish and to limit expansion of the foam. The extrudate is then stretched over any suitable sizing block of a circumference selected to produce a desired sheet width. The circumference of the sizing block determines the width of the produced sheet, which preferably is about 36 to about 96 inches. The process can be operated with continuous slitting and removal or take-off of the resulting styrenic foam sheet. The take-off rates and extrusion rates can be determined by persons skilled in the art by routine experimentation, and generally will be 30-150 linear feet per minute.

The foams are then slit into sheets. The styrenic foam sheets produced by the method of the invention have densities less than 6.0 lb/ft$^3$, preferably less than 4.0 lb/ft$^3$, are generally below 0.25 inch in thickness and 24 square inches in cross-sectional area and have particular utility for packaging applications. The sheets prepared according to the invention are substantially closed-celled products having properties comparable to commercially available foam sheets used to produce packaging. After a suitable aging period, the sheets are shaped by suitable processes, such as application of heat and pressure in conventional thermoforming, into shaped articles of desired size and shape, such as plates, cups, containers, clamshells and the like. It is preferred to age the sheets produced by the method of the invention for at least two days before thermoforming.

The following examples are intended to illustrate the method and blowing agent of the invention, and should not be interpreted as limiting.

EXAMPLE 1

Six grams per 100 square inches polystyrene foam was produced using each of two blowing agent systems: a blowing agent composition of the invention, comprising ethanol, denatured with 5% by volume methanol, and propane and a comparative system of n-butane. The polystyrene resin used was Amoco Chemical Company R2 having a melt flow of 2 grams per 10 minutes as measured by ASTM D1238 200/5.0. Talc, 0.25 part by weight per 100 parts by weight polystyrene, was mixed with the resin. The foams were produced on a 4 l-2/6 inch two screw tandem extruder, having the primary extruder section maintained at a temperature of 400°F and a pressure of 3500 psi at the resin injection point, and having the secondary extruder section maintained at different temperatures along the secondary extruder, from the secondary extruder entrance to the extrusion die, respectively, of 100°F and 260°F. The blowing agent systems were injected at a pressure of 3000 psi into the resin near the end of the primary extruder at a rate per 100 parts by weight resin of 3.0 parts by weight ethanol/propane and 4.0 parts by weight n-butane, respectively. (Four parts of n-butane was used in the comparative example, because use of three parts of n-butane per 100 parts resin results in unacceptable foam of too high density and too thin thickness.) The weight ratio of ethanol to propane was 1:2 and the ethanol and propane were mixed just before the injection point. The extrusion mass was extruded through a conventional annular die of 3.75 inch circumference with an annular gap of .015 inch at a rate of 500 lbs. extrusion mass per hour into a foaming zone having a temperature of 80°F and at atmospheric pressure. The extrudate was stretched over a sizing block 52 inches in circumference. The foam was then slit to produce finished foam sheets of 0.060 inch thickness and 52 inches width.

The finished sheets made with ethanol/propane and with the butane control after 3 days aging were then thermoformed under identical conditions in a conventional thermoforming oven to form hinged sandwich containers. No difficulties in thermoforming were noted and the sheets made with ethanol/propane gave better expansion in the oven than the butane control sheets, ranging from 90 to 160% increase in thicknesses, compared to 75 to 120% for the butane control sheets. The quality of the sandwich containers produced from the ethanol/propane sheets was as good or better than those made from the butane sheets.

VOC emissions from the sheet manufacturing, aging and thermoforming were monitored. Applicant observed a decrease of 25% by weight in VOC emissions in the production of foam sheets of similar quality, compared to use of the n-butane blowing agent, from use of the blowing agent of the invention.

EXAMPLE 2

Seventeen gram per 100 square inches polystyrene foam of density 4.0 lbs per cubic foot was produced under the same equipment and conditions as in Example 1 using a 2:1 mixture of propane to ethanol at a concentration of 2.8 parts mixture per 100 parts polystyrene as the blowing agent. A control was produced of similar density using 4.0 parts n-butane per 100 parts polystyrene as the blowing agent. As in Example 1, the ethanol/propane sheets showed more expansion in thermoforming thus better filling the mold and yielding a more aesthetic product. In addition, VOC emissions were reduced 30% versus the n-butane control. Sandwich trays were made from the produced sheets under identical conditions. The sidewall crush strength of the finished trays was measured by ASTM D1621 Method A, except a modified clamp was used to hold an entire tray in place.

Comparison data of the trays produced from the butane sheet and the propane/alcohol sheet are as follows:

| | Butane | Propane/Alcohol |
|---|---|---|
| Tray Weight (g) | 17.10 | 17.40 |
| Sidewall Thickness (mils) | 207.5 | 223.9 |
| Bottom Thickness (mils) | 188.7 | 194.4 |
| Sidewall Strength (Kg) at yield | 3.2 | 3.45 |

As in the previous example, it is seen that the alcohol/alkane blown sheets give better expansion and consequently superior part definition than those made with the butane control.

EXAMPLE 3

Initially, a trial to produce foam using only ethanol and methanol was scheduled. The tandem extruder line described in Example 1 was operated at the conditions of Example 1 using 2.2 parts methanol per 100 parts polystyrene as the blowing agent. The foam sheet produced ranged in density from 6.1 to 9.9 lb/ft$^3$, had cell size greater than 10 mil and a rough glassy surface. These properties are typical of too much plasticizer and would result in a low quality product after thermoforming. Results were similar when ethanol and ethanol/methanol blowing agents were processed. On purging the ethanol out with butane, it was noticed that a very good appearance foam of density 3.7 lb/ft$^3$ was produced while the odor of alcohol in the foam was still strong. This then led to additional experiments using the blowing agent blend of the invention.

As seen in the Examples, the blowing agent of the invention can be readily used in conventional extrusion apparatus to produce high quality styrenic foam sheets, and then sheets can be conventionally thermoformed to produce high quality foam articles.

It should be noted that the above is not intended to limit the scope of the invention, as various modifications may be made. Rather the invention's scope is set out by the following claims.

## Claims

1. A method of producing a styrenic foam which comprises: forming a mixture comprising at least one molten styrenic resin, at least one $C_1$-$C_3$ alcohol and at least one $C_2$-$C_5$ alkane.

2. The method of claim 1 wherein the styrenic resin is mixed with the alcohol and the alkane to create an extrusion mass at a temperature and pressure at which the resin is plasticized and the alcohol and alkane are maintained in solution in the resin, and the extrusion mass is extruded into a foaming zone of lower temperature and pressure to produce a styrenic foam.

3. The method of claim 1 wherein the mixture comprises about 0.5 to about 3.0 parts by weight alcohol per 100 parts by weight resin, and about 1.0 to about 4.0 parts alkane per 100 parts by weight resin.

4. A method according to any preceding claim wherein said mixture in addition comprises at least one atmospheric gas.

5. A method for the production of a styrenic foam sheet having a thickness of less than about 0.25 inch comprising:
   (a) heating a styrenic resin in an extruder to produce a molten resin;
   (b) injecting into the molten resin a blowing agent comprising at least one of methanol, ethanol, n-propanol and iso-propanol and at least one $C_2$-$C_5$ alkane to produce an extrusion mass under a pressure sufficient to prevent foaming of the extrusion mass;
   (c) extruding the extrusion mass through an annular die into a zone having a temperature and pressure sufficient to permit expansion of the extrusion mass to produce a styrenic foam pipe; and
   (d) slitting the foam pipe to produce the foam sheet.

6. The method of claim 5 wherein the blowing agent comprises about 0.5 to about 3.0 parts by weight alcohol per 100 parts by weight resin and about 1.0 to about 4.0 parts alkane per 100 parts by weight resin.

7. The method of claim 5 or claim 6 wherein the blowing agent comprises ethanol and propane.

8. The method of any of claims 5 to 7 wherein the blowing agent further comprises carbon dioxide.

9. The method of claim 8 wherein the blowing agent comprises ethanol, propane and carbon dioxide.

10. The method of any of claims 5 to 7 wherein the blowing agent further comprises an atmospheric gas.

11. The method of claim 10 wherein amount of atmospheric gas is less than about 30.0 weight percent of the

blowing agent.

**12.** The method of any of claims 4, 10 and 11 wherein the atmospheric gas is selected from nitrogen, carbon dioxide and mixtures thereof.

**13.** The method of any preceding claim wherein the weight ratio of the alcohol to the alkane is less than or equal to 1:1.

**14.** The method of any preceding claim wherein the styrenic resin comprises homopolymeric polystyrene.

**15.** The method of any of claims 1 to 13 wherein the styrenic resin comprises impact polystyrene.

**16.** The method of any preceding claim further comprising thermoforming the foam sheet into shaped articles.